# EUROPEAN PATENT APPLICATION

(11) **EP 3 269 892 A1**
(43) Date of publication of application: **17.01.2018**
(21) Application number: 16179578.6
(22) Date of filing: 14.07.2016
(51) Int. Cl.: E04C 2/20, E04C 2/36, A01K 1/00, B29C 45/00

(54) **A SEPARATION PANEL AND THE RELATED MANUFACTURING METHOD**

(71) Applicant: Paneltim N V, 8810 Lichtervelde (BE)
(72) Inventor: Stijn, De Meyer, 9520 St. Lievens Houtem (BE); Filip, Deltour, 8650 Merkem (BE); Lode, Deltour, 8920 Langemark (BE)
(74) Representative: Plas, Axel Ivo Michel

(57) **Abstract**

A method of manufacturing a separation panel (1) comprising:
- producing by injection moulding two semi-panels (101;102) comprising:
o a sidewall (110) comprising an inner surface (111) and an outer surface (112);
o a pair of parallel longitudinal walls (120);
o a pair of parallel traverse walls (130);
and wherein at least one semi-panel (101) further comprises a plurality of longitudinally and/or traverse partition walls (140) delimitating inside cavities (150) in said semi-panel (101), and wherein one or more of said partition walls (140) comprise respective openings (141);
- arranging said two semi-panels (101;102) one against the other, thereby forming a closed structure (2) with a plurality of inside cavities (150) connected along the longitudinal direction (3) and/or along the traverse direction (4) through said openings (141); and
- welding said two semi-panels (101;102) together, thereby forming said separation panel (1).

## Description

### Field of the Invention

The present invention generally relates to a separating panel used as a construction wall of buildings, for example of non-pressurized constructions such as air scrubbers or air filters, or for example of pressurized constructions such as liquid tanks or gas tanks. The present invention also generally relates to a separation panel for a location where animals stay, such as for example a cattle pen, an enclosure for livestock, etc..

Such separation panels are used, amongst other, for forming partitions in barns for animals, for example in the intensive animal husbandry, where the separation panels are used for subdividing litter stations and rearing stations into separate stalls.

### Background of the Invention

In the intensive animal husbandry, barns in which animals stay must be cleaned thoroughly on a very regular basis in order to minimize the spreading of bacteria and disease-carrying germs that can endanger the health of the livestock. For example, after a group of animals has been moved out of a barn, and before a second group of animals takes the place of the first group, the barn and the separation panels must be thoroughly cleaned and disinfected in order to prevent a possible transfer of diseases from animals of the first group to animals of the second group. A fast and efficient cleaning solution requires the use detergent or water under high pressure.

The separation panels must therefore be able to withstand repeated cleanings, for example repeated cleanings based on water under high pressure. The separation panels must also be light weight such that they can be manually moved in the barns during the cleaning of the barns and/or the sorting of the animals. Preferably, the separation panels must also be able to withstand elevated temperatures without igniting in order for example to prevent spreading of flames to adjacent stalls and barns in case of fire, or for example to prevent the ignition of gases comprised in a gas tank construction.

Separation panels may be manufactured in laminated fibreboard. However, such fibreboard plates are not water- nor moist-resistant and they absorb humidity in humid conditions. Swollen separation panels are difficult to manually move around and they lose their stability and hygienic features. Alternatively, separation panels may be manufactured in concrete. However, concrete-made separation panels must be coated in order to make them hygienic enough to be used in enclosures for livestock for example. This makes the manufacturing process of the separation panels more complex. Alternatively, separation panels may be manufactured in steel-bordered and reinforced massive plates of thermo-hardening synthetic material. However, the required steel reinforcement makes the separation panels heavy and less hygienic as separation panels comprising steel are subject to rusting. If the separation panels become soiled by cleaning water, urine, excrements, etc., it becomes impossible to clean the separation panels thoroughly.

EP1219168 discloses a separation panel for a space for keeping animals. The separation panel described in EP1219168 consists of synthetic material manufactured by injection moulding and is closed on all sides. This provides for a minimum deposition of dirt on these panels and ensures the separation panel is very resistant against chemical products, mildews, bacteria and disinfectants present in the barns. Corrosion or decomposition of the synthetic separation panel is totally excluded. The separation panel described in EP1219168 is injection moulded such that it comprises smooth convex outer surfaces that do not present any irregularities. This way, the risk that an animal hurts itself on protrusions of the separation panel and the risk that dirt accumulates in recesses of the separation panel are minimized.

In the fields of construction and intensive animal husbandry, separation panels must further demonstrate good mechanical strength. For example, when separation panels are subdividing litter or rearing stations into separate stalls, animals might lean on the separation panels, thereby exercising a local pressure point, and they might also bump into the separation panels with their legs, their heads, their horns, etc.. The separation panels must therefore demonstrate good bend, tensile, shear and compression strengths to withstand forces applied parallel or perpendicular to them without changing shape or being torn. Additionally, separation panels demonstrating good thermal isolation properties can also be used in construction as thermal isolators.

The separation panel disclosed in EP1219168 comprises empty inside partitions along the longitudinal length of the separation panel. No material is therefore present in the partition and there exists a risk that a sidewall of the separation panel bends when submitted to a local pressure at a location of an inside partition, and/or when bumped by the horns of an animal at a location of an inside partition. Additionally, as it is designed to be light-weight, a large number of fixation points to the ground are necessary to ensure the separation panel stays upright and does not fall over when pushed by an animal. The separation panel of EP1219168 therefore demonstrate poor mechanical resistance. Alternatively, the inside partitions of the separation panel of EP1219168 can be filled with an insulating material which is not fire resistant nor fire retardant. On Fig. 5 of EP1219168, before closing the separation panel by placing the lowermost longitudinal edge 4, an insulating material can be brought into the partitions through the opening at the underside of the separation panel. A strip of insulating material is first cut at the dimensions of a partition and is manually inserted in one of the partitions. The strip is then manually slid along the partition until the partition is completely filled with insulating material. This operation is therefore complex and the resulting thermal isolating properties of the separation panel are limited. Indeed, as the separation panel of EP1219168 is manufactured in a single piece by injection moulding, the insulating material can only brought into the separation panel at the partitions the closest to the lowermost longitudinal edge 4 once the separation panel has been moulded, and the other inside partitions of the separation panel therefore remain empty.

It is an objective of the present invention to disclose a separation panel and the related manufacturing method that overcomes the above identified shortcomings of existing solutions. More particularly, it is an objective to disclose a separation panel which demonstrates mechanical strengths and resistance while demonstrating good thermal isolation properties and ensuring hygienic conditions when used in locations where livestock is enclosed.

### Summary of the Invention

According to a first aspect of the present invention, the above defined objectives are realized by a method of manufacturing a separation panel made of a synthetic material, the method comprising the steps of:
- providing at least one mould;
- producing two semi-panels by injection moulding, wherein each of the two semi-panels comprises:
   o a sidewall comprising an inner surface and an outer surface;
   o a pair of parallel longitudinal walls extending from the inner surface;
   o a pair of parallel traverse walls extending from the inner surface;
   and wherein at least one semi-panel of the two semi-panels further comprises a plurality of longitudinal and/or traverse partition walls extending from the inner surface, wherein:
   o the partition walls delimitate inside cavities in the semi-panel; and
   ∘ one or more of the partition walls comprise respective openings extending through the partition walls;
- arranging the two semi-panels one against the other along the longitudinal walls and the traverse walls such that the inner surfaces of the sidewalls face each other, thereby forming a closed structure with a plurality of inside cavities connected along the longitudinal direction and/or along the traverse direction through the openings; and
- welding the two semi-panels together along the longitudinal walls and the traverse walls, thereby forming the separation panel.

Injection moulding both semi-panels ensures the outer surfaces of the sidewalls of the semi-panels are smooth and without irregularities, such as protrusions and/or recesses, and the semi-panels are resistant to scratches. This way, the risk that animals hurt themselves on the separation panels and the risk that dirt accumulates on the separation panels are minimized. Additionally, the method comprises manufacturing a closed structure comprising inside cavities connected to each other through the openings along the longitudinal direction and/or along the traverse direction of the separation panel. Manufacturing a closed structure ensures dirt does not enter and accumulate in the separation panel. Separation panels manufactured with the method according to the present invention can be cleaned thoroughly and are therefore highly hygienic for uses in enclosures for livestock.

Separation panels manufactured according to the method of the present invention with connected inside cavities through the openings demonstrate improved mechanical strength compared to separation panels which comprise inside cavities which are not connected along their longitudinal directions and/or their traverse directions. In other words, the mesh of inside cavities connected along the longitudinal direction and/or the traverse direction of a separation panel improves the bend, tensile, shear and compression strengths of the corresponding panel. A separation panel manufactured with the method according to the present invention is therefore more mechanically resistant and can withstand larger pressures and tensions without bending and/or tearing.

The manufacturing method according to the present invention is simple and flexible. Injection moulding both semi-panels allows manufacturing separation panels in a synthetic material such as for example a polymer material, a thermoplastic, etc.. To each type of semi-panel comprises an injection moulding mould which is re-used to manufacture semi-panels in series. The method is therefore cost effective. The method comprises manufacturing two semi-panels, which can be symmetrical, or alternatively which can be different. For example, a separation panel manufactured according to the present invention may comprise a semi-panel comprising inside cavities with partition walls comprising respective openings and a semi-panel which does not comprise inside cavities. Alternatively, a separation panel manufactured according to the present invention may comprise a semi-panel comprising inside cavities with partition walls comprising respective openings and a semi-panel which comprises inside cavities with partition walls which do not comprise openings. Alternatively, a separation panel manufactured according to the present invention may comprise a semi-panel comprising inside cavities with partition walls comprising respective openings and a semi-panel which comprises inside cavities which coincide with inside cavities of the first semi-panel and with partition walls which comprises openings. This flexibility of the manufacturing method provides adaptability of the mechanical strength of the resulting separation panel.

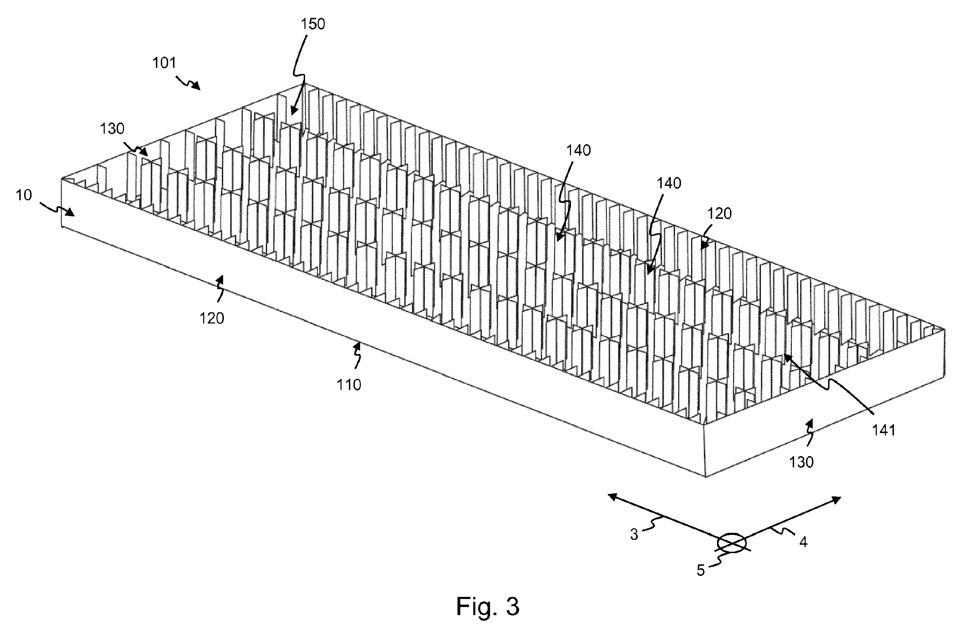

According to the present invention, the partition walls comprise respective openings extending through the partition walls. Alternatively, the partition walls comprise respective recesses. In other words, an inside cavity is defined by partition walls which each comprise a inner wall surface facing the inside cavity and an outer wall surface facing away from the inside cavity, and partition walls may comprise respective indentations defined on the inner wall surfaces and/or on the outer wall surfaces. The respective openings of the partition walls according to the present invention are rectangular. For example the openings are square. According to the present invention, the openings of the partition walls of a semi-panel are identical. Alternatively, the openings of the partition walls of a semi-panel are a combination of several shapes, for example rectangles, circles, triangles, rhombuses, oblong openings with sharp angles or round angles, etc.. According to the present invention, partition walls of the semi-panel comprise one opening. Alternatively, each partition wall of the semi-panel comprises more than one opening. A separation panel according to the present invention may be used to construct walls, floors, ceilings, doors, roofs, windows in construction walls, etc.. A separation panel according to the present invention is for example used in pressurized or non-pressurized constructions, for example liquid tanks or gas tanks, or for constructions such as enclosures for livestock such as for example dogs, cows, pigs, fishes, poultry, horses, or any other animals, etc.. According to the present invention, a separation panel comprises air trapped between the two semi-panels when the two semi-panels are welded together. According to the present invention, the outer surface of the sidewall of a semi-panel is a flat, i.e. a smooth surface. Alternatively, the outer surface of the sidewall of a semi-panel comprises anti-slip structures extending from the outer surface. For example, the anti-slip structures may be circular structures or square structures injection moulded at the same time than the semi-panel. This way, a separation panel used for example as a floor panel on which animals must step in an enclosure for livestock prevents the animals from slipping when stepping and/or moving, thereby ensuring the animals remain safe. According to the present invention, the two semi-panels of the separation panel have the same thickness along the depth direction defined in Fig. 3. The thickness of a semi-panel according to the present invention is for example 5cm, 10cm, 20cm, 40cm, 60cm, 80cm, 100cm, etc.. Alternatively, the two semi-panels of the separation panel have different thicknesses along the depth direction defined in Fig. 3. This way, the method of manufacturing is made flexible as a semi-panel of a given thickness may be welded together with another semi-panel of a different thickness.

According to an optional aspect of the invention, the method further comprises the step of filling the separation panel at least partially with a fire resistant material or a fire retardant material.

This way, the method ensures a manufactured separation panel withstands elevated temperatures without igniting. In case of fire, a separation panel therefore retards and/or prevents the spreading of heat and/or flames from one side of the separation panel the other side of the separation panel. Separation panels manufactured with the method according to the present invention can therefore be used in construction as thermal isolators and as fire blocking panels in buildings and in barns. Alternatively, the method further comprises the step of filling the separation panel with an insulating material adapted to increase the thermal properties of the separation panel. For example, filling the separation panel with an insulating material can ensure the separation panel thermally insulates the construction for which it is used as a wall, thereby preventing cold air from entering the construction. Alternatively, a separation panel according to the present invention is filled with one or more of the following: air, mineral wool, textiles, polystyrene foams and/or polystyrene beads, fibres, water, liquids, gases, etc.. Alternatively, the method further comprises filling the separation panel with an acoustically isolating material, such as for example a mineral wool which demonstrates for example an acoustic attenuation of 25 to 30dB. This way, a separation panel according to the present invention is adapted to isolate acoustically. Alternatively, the method further comprises filling the separation panel with an isolation material demonstrating good thermal isolation properties and good acoustical attenuation properties.

A separation panel according to the present invention is able to withstand higher resistances as the sidewalls of the separation panel are adapted to withstand the equivalent strength of the cross section filled reinforcement. Cracks of the separation panel - which may be caused by its limited resistance to shrinkage, to thermal expansion and to contraction due to a temperature change - is minimized thanks to reinforcements such as beams, thanks to the addition of an isolation material or of concrete in the separation panel, etc.. Indeed, the filling medium of the separation panel then withstands all the stresses generated in the separation panel. In other words, the risk of cracks will be minimised by reducing the limitation on the free expansion of the separation panel. Stresses in the separation panel are also minimized as the separation panel comprises walls extending along the longitudinal and the traverse directions that provide movements of joints or create interposition in the separation panel, thereby reducing stresses in the separation panel. When a separation panel comprises a filling material at a high temperature, stresses caused by difference in temperature between the inside and the outside of the separation panel will also be minimized as the material in the separation panel can withstand temperature changes and stresses induced in the separation panel as a whole.

According to an optional aspect of the invention, the step of filling the separation panel further comprises:
- puncturing with an injection needle the sidewall of one of the semi-panels from the outer surface to the inner surface at a position of an inside cavity; and
- injecting the fire resistant material or the fire retardant material in the inside cavity.

This way, the fire resistant material or the fire retardant material is injected in an inside cavity of the separation panel such that the material spreads in the inside cavity and completely fills the inside cavity. As inside cavities may be connected through openings in the partitions walls along the longitudinal and/or the traverse direction of the separation panel, the fire resistant material or the fire retardant material injected in an inside cavity may spread to inside cavities of the separation panel connected to the inside cavity, thereby filling the separation panel with fire resistant or fire retardant material. By piercing the sidewall of a semi-panel at different locations and injecting the fire resistant or fire retardant material in several inside cavities, the method ensures the material is spread in the separation panel and therefore improves the overall fire resistance of the separation panel.

According to an optional aspect of the invention, the method further comprises the step of filling the separation panel at least partially with concrete.

Concrete is a composite material composed of aggregates bonded together with a fluid cement, such as Portland cement mixed with water, which hardens over time. Sand, natural gravel, crushed stone, rocks, etc. are examples of aggregates used in the composition of concrete. Portland cement for example comprises a mixture of calcium silicates, aluminates and ferrites, i.e. compounds which combine calcium, silicon, aluminium and iron in forms which will react with water. Alternatively, concrete comprises hydraulic cements, such as calcium aluminate cements comprising hydraulic calcium aluminates.

This way, separation panels manufactured with the method according to the present invention demonstrate improved mechanical strength and can be used in construction as construction members. According to the present invention, a separation panel may be delivered at construction site where a construction is to be built using the separation panel and the separation panel can be filled with concrete directly at the location of the construction site where it is required. This way, a separation panel filled with concrete must not be transported, which saves effort and transportation costs. Alternatively, a separation panel according to the present invention is filled with concrete before delivery to a construction site. Alternatively, a construction panel according to the present invention is used to cast foundations of constructions such as for example beams or tubes or grids. The two semi-panels are positioned such that they cast the foundations of constructions that fit in the openings of the semi-panels for example, and the two semi-panels are then welded together. Additionally, the resulting separation panel may be filled with concrete or any other material, thereby casting the foundations of the construction in the separation panel.

According to an optional aspect of the invention, the step of filling said separation panel comprises:
- producing one of the longitudinal walls or one of the traverse walls of at least one of the two semi-panels with an opening;
- adding concrete in the separation panel through the opening;
- allowing the concrete to set; and
- closing the opening in the longitudinal or traverse walls.

This way, the method comprises manufacturing a separation panel in a practical manner. Indeed, the separation panels are manufactured, are then transported to the location where they have to be installed, and are then at least partially filled with concrete. This way, heavy separation panels at least partially filled with concrete must not be moved around before reaching their final destination.

According to an optional aspect of the invention, the step of welding the two semi-panels together comprises soldering.

This way, the junction between the two semi-panels of the separation panel is smooth. Alternatively, the step of welding the two semi-panels together comprises one or more of the following: mirror soldering, high frequency soldering, infrared soldering, specular soldering, etc.. According to the present invention, the two semi-panels are welded together when the two semi-panels are positioned horizontally such that both the longitudinal and the traverse directions are horizontal. This way, gravity is uniformly distributed across the sidewalls of the two semi-panels. Alternatively, the two semi-panels are welded together when the two semi-panels are positioned vertically such that the longitudinal direction of the separation panel is vertical and such that the traverse direction is horizontal.

According to an optional aspect of the invention, the method further comprises inserting a ballast in the openings before the two semi-panels are welded together.

This way, the method further comprises ballasting a separation panel by adding one or more ballast in the openings before the two semi-panels are welded together, wherein the ballast extends in connected inside cavities along the longitudinal and/or the traverse direction of the separation panel. This way, the number of fixations of a separation panel to the ground can also be minimized. Indeed, the method may comprise inserting a ballast in the openings wherein the ballast extends through an opening out of the separation panel longitudinally or along the traverse direction. The method may further comprise the step of fixing the ballast to the ground, thereby fixing the separation panel to the ground and minimizing the number of fixations of the separation panel to the ground.

If the separation panel is adapted to be used as a construction wall of a pressurized construction, such as a liquid or a gas tank for example, and if the separation panel is directly resting on the ground, the longitudinal walls and the traverse walls of the separation panel can be reinforced without any direct interference with the tank. The ballast is positioned inside the separation panel and will reinforce the separation panel from the inside and will increase the nominal resistance which needs to be provided to the separation panel, in order to carry the load. Additionally, as the ballast is inserted in the separation panel, the ballast is protected from the influence of outside conditions, for example the ballast is less subject to corrosion. When the separation panel is filled with concrete or with an insulating material, and/or when a ballast is inserted in the separation panel, the bending moments at the junction between the walls of the separation panel and the ground can be taken into account as any direct forces which will be transferred to the filling material of the separation panel and/or to the reinforcements such as the ballast.

Alternatively, the method further comprises inserting one or more metallic beams or metallic bars in the separation panel in the openings before the two semi-panels are welded together, for example iron beams. Alternatively, the method further comprises inserting one or more metallic tubes in the separation panel in the openings before the two semi-panels are welded together, for example iron tubes. Alternatively, the method further comprises inserting a net of metallic beams in the separation panel in the openings before the two semi-panels are welded together, for example a net of iron beams. Alternatively, the method further comprises inserting one or more of the following: a ballast, one or more metallic beams or bars, one or more metallic tubes, a net of metallic beams, etc. in the openings after the two semi-panels are welded together. Alternatively, the method further comprises inserting one or more fibre glass and/or composite beams, or tubes or bars in the openings before the two semi-panels are welded together. The one or more ballasts may be inserted in the openings of the partition walls such that the one or more ballasts extend through one or more inside cavities along the longitudinal direction and/or along the traverse direction of the separation panel. According to the present invention, the ballast is completely comprised in the separation panel. Alternatively, the ballast extends out of the separation panel. Alternatively, the method further comprises inserting a feeding probe for animals in an enclosure for livestock in the openings after the two semi-panels are welded together such that one end of the feeding probe exits the separation panel. This way, the feeding probe is protected in the separation panel, which guarantees the outer surface of the feeding probe is not contaminated by contact with the animals, thereby ensuring hygiene in the process of feeding the animals.

According to an optional aspect of the invention, the synthetic material is thermoplastic.

This way, separation panels manufactured according to the method of the invention are washable, resistant to scratches and hygienic. Additionally, the separation panel do not require to be coated in order to become hygienic, which ensures the method of manufacturing remains simple. According to the present invention, thermoplastic is for example Polyethylene, referred to as PE, or Polypropylene, referred to as PP, or any thermoplastic, or any thermoplastic comprising for example additives.

According to a second aspect of the invention, there is provided a separation panel made of a synthetic material, the separation panel comprising two semi-panels adapted to be produced by injection moulding, wherein each of the two semi-panels comprises:
- a sidewall comprising an inner surface and an outer surface;
- a pair of parallel longitudinal walls extending from the inner surface;
- a pair of parallel traverse walls extending from the inner surface;
wherein at least one semi-panel of the two semi-panels further comprises a plurality of longitudinal and/or traverse partition walls extending from the inner surface, wherein:
- the partition walls are adapted to delimitate inside cavities in the semi-panel; and
- one or more of the partition walls comprise respective openings extending through the partition walls;
and wherein the two semi-panels are adapted to:
- be arranged one against the other along the longitudinal walls and the traverse walls such that the inner surfaces of said sidewalls face each other, thereby forming a closed structure with a plurality of inside cavities connected along the longitudinal direction and/or along the traverse direction through the recesses; and
- be welded together along said longitudinal walls and the traverse walls.

Injection moulding both semi-panels ensures the outer surfaces of the sidewalls of the semi-panels are smooth and without irregularities, such as protrusions and/or recesses, and the semi-panels are resistant to scratches. This way, the risk that animals hurt themselves on the separation panels and the risk that dirt accumulates on the separation panels are minimized. Additionally, a closed structure comprising inside cavities connected to each other through the openings along the longitudinal direction and/or along the traverse direction of the separation panel is manufactured. Manufacturing a closed structure ensures dirt does not enter and accumulate in the separation panel. Separation panels according to the present invention can be cleaned thoroughly and are therefore highly hygienic for uses in enclosures for livestock.

Separation panels according to the present invention with connected inside cavities through the openings demonstrate improved mechanical strength compared to separation panels which comprise inside cavities which are not connected along their longitudinal directions and/or their traverse directions. In other words, the mesh of inside cavities connected along the longitudinal direction and/or the traverse direction of a separation panel improves the bend, tensile, shear and compression strengths of the corresponding panel. A separation panel according to the present invention is therefore more mechanically resistant and can withstand larger pressures and tensions without bending and/or tearing.

Injection moulding both semi-panels allows manufacturing separation panels in a synthetic material such as for example a polymer material, a thermoplastic, etc.. To each type of semi-panel comprises an injection moulding mould which is re-used to manufacture semi-panels in series. The two semi-panels can be symmetrical, or alternatively can be different. For example, a separation panel manufactured according to the present invention may comprise a semi-panel comprising inside cavities with partition walls comprising respective openings and a semi-panel which does not comprise inside cavities. Alternatively, a separation panel manufactured according to the present invention may comprise a semi-panel comprising inside cavities with partition walls comprising respective openings and a semi-panel which comprises inside cavities with partition walls which do not comprise openings. Alternatively, a separation panel manufactured according to the present invention may comprise a semi-panel comprising inside cavities with partition walls comprising respective openings and a semi-panel which comprises inside cavities which coincide with inside cavities of the first semi-panel and with partition walls which comprises openings. A separation panel according to the present invention can be fixed to the ground such that the separation panel rests on the ground along its traverse direction or its longitudinal direction, or such that the separation panel is inserted in the ground along its traverse direction or along its longitudinal direction. Alternatively, a separation panel according to the present invention is adapted to be positioned on a construction such that the separation panel is positioned above the ground not in contact with the ground. The design of a separation panel according to the present invention is such that the separation panel is sufficiently strong and effective by combining a strong integrated concept which fulfils the combination of lightness and hygiene. A separation panel according to the present invention demonstrates improved mechanical properties while being designed thanks to well-known calculation principles, which guarantees the production process remains simple.

According to the present invention, the partition walls comprise respective openings extending through the partition walls. Alternatively, the partition walls comprise respective recesses. In other words, an inside cavity is defined by partition walls which each comprise a inner wall surface facing the inside cavity and an outer wall surface facing away from the inside cavity, and partition walls may comprise respective indentations defined on the inner wall surfaces and/or on the outer wall surfaces. The respective openings of the partition walls according to the present invention are rectangular. For example the openings are square. According to the present invention, the openings of the partition walls of a semi-panel are identical. Alternatively, the openings of the partition walls of a semi-panel are a combination of several shapes, for example rectangles, circles, rhombuses, etc.. According to the present invention, partition walls of the semi-panel comprise one opening. Alternatively, each partition wall of the semi-panel comprises more than one openings.

According to an optional aspect of the invention, the plurality of inside cavities covers the inner surface of the sidewall completely.

According to an optional aspect of the invention, both semi-panels of the separation panel comprise a symmetric plurality of partition walls such that the partition walls of one of the semi-panels are in direct contact with the partition walls of the other semi-panel of said separation panel when the two semi-panels are arranged one against the other.

This way, a mesh of inside cavities is formed in the separation panel such that the inside cavities are delimited by partition walls extending half from the inner surface of the sidewall of one semi-panel and by partition walls extending half from the inner surface of the sidewall of the other semi-panel.

According to an optional aspect of the invention, the sidewalls of the two semi-panels are oblong.

According to an optional aspect of the invention, the separation panel is further adapted to be used in a cattle pen or in an enclosure for livestock.

According to an optional aspect of the invention, the sidewalls of the two semi-panels comprise a plurality of transversal openings adapted to face each other when the two semi-panels are arranged one against the other.

This way, when the separation panels are used in cattle pens, the animals can experience better living conditions thanks to the transversal openings in the separation panels. For example, animals get fresh air thanks to the transversal openings, they can also see animals standing on the other side of the separation panel which may have an effect on their stress, and they might pass their heads through the transversal openings in order to reach for food.

According to an optional aspect of the invention, the cross section is circular and each transversal opening is delimited by walls having a convex cross-section, and the walls are bent towards one another and are connected to one another so that they give the walls a convex cross section.

According to an optional aspect of the invention, each of the openings has an oblong shape whose end portions have a mainly semi-circular shape and wherein each of the openings mainly extends vertically.

According to an optional aspect of the invention, at least one semi-panel of the two semi-panels further comprises a plurality of longitudinal and/or traverse partition walls extending from the inner surface, wherein:
- the partition walls are adapted to delimitate inside cavities in the semi-panel; and
- one or more of said partition walls of the inside cavities delimited above and under the transversal openings in the separation panel comprise respective openings extending through the partition walls.

This way, the mechanical strength of a separation panel is ensured as the transversal openings are reinforced by inside cavities delimited by partition walls which do not comprise openings. Above and below the transversal openings, the separation panel comprises inside cavities delimited by partition walls comprising respective openings, and the separation panel can there be at least partially filled with either a fire resistant or fire retardant material or with concrete.

### Brief Description of the Drawings

Fig. 1 schematically illustrates an embodiment of a semi-panel according to the present invention comprising inside cavities connected along the longitudinal direction.
Figs. 2A to 2F schematically illustrate a top view, a perspective view, and side views of cross-sections of an embodiment of a semi-panel according to the present invention comprising inside cavities connected along the longitudinal direction.
Fig. 3 schematically illustrates an embodiment of a semi-panel according to the present invention comprising inside cavities connected along the longitudinal direction and along the traverse direction.
Figs. 4A to 4G schematically illustrate a top view, a perspective view, and side views of cross-sections of an embodiment of a semi-panel according to the present invention comprising inside cavities connected along the longitudinal direction and along the traverse direction.
Fig. 5A schematically illustrates an exploded view of a separation panel according to the present invention comprising one semi-panel comprising inside cavities connected along the longitudinal direction and along the traverse direction. Fig. 5B schematically illustrates an exploded view of a separation panel according to the present invention comprising two symmetric semi-panels, each semi-panel comprising inside cavities connected along the longitudinal direction and along the traverse direction.
Fig. 6A schematically illustrates an exploded view of a separation panel according to the present invention comprising a fire resistant material or a fire retardant material. Fig. 6B schematically illustrates an exploded view of a separation panel according to the present invention comprising concrete.
Fig. 7 schematically illustrates a top view of a semi-panel according to the present invention comprising inside cavities delimited by partition walls comprising openings in which a ballast is inserted.
Fig. 8 schematically illustrates a separation panel comprising a plurality of transversal openings.
Fig. 9 illustrates the steps of the method according to the present invention for manufacturing a separation panel.

### Detailed Description of Embodiment(s)

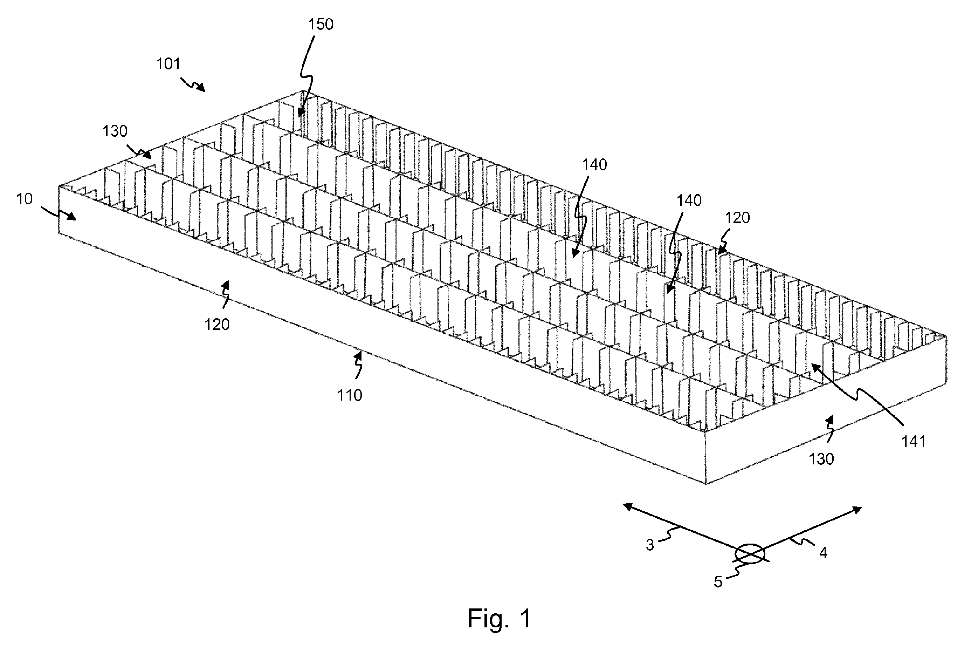

According to an embodiment shown in Fig. 1, a longitudinal direction 3 is defined, a traverse direction 4 is defined and a depth direction 5 is defined. According to an embodiment shown in Fig. 1, a semi-panel 101 is made of synthetic material 10 and comprises a sidewall 110 with an inner surface and an outer surface. The semi-panel 101 further comprises a pair of parallel longitudinal walls 120 extending from the inner surface of the sidewall 110 and a pair of traverse walls 130 extending from the inner surface of the sidewall 110 along the depth direction 5. The semi-panel 101 comprises a plurality of longitudinal and traverse partition walls 140 extending from the inner surface of the sidewall 110 along the depth direction 5. According to the embodiment depicted in Fig. 1, the longitudinal and the traverse partition walls 140 extend as much as the longitudinal walls 120 along the depth direction 5 and as much as traverse walls 130 along the depth direction 5. According to an alternative embodiment, the longitudinal and the traverse partition walls 140 extend less than the longitudinal walls 120 along the depth direction 5 and/or less than the traverse walls 130 along the depth direction 5. As shown in Fig. 1, longitudinal and the traverse partition walls 140 also extend from the longitudinal walls 120 and from the traverse walls 130 along the longitudinal direction 3 and the traverse direction 4. The partition walls 140 of the semi-panel 101 delimitate inside cavities 150 in the semi-panel 101. The partition walls 140 further comprise respective openings 141 extending through the partition walls 140 such that a plurality of inside cavities 150 are connected along the longitudinal direction 3 through the openings 141. The semi-panel 101 is produced by injection moulding. According to the embodiment shown in Fig. 1, the inner surface of the sidewall 110 of the semi-panel 101 is completely covered with inside cavities 150. In other words, the inside cavities 150 completely cover the inner surface of the sidewall 110 of the semi-panel 101. According to an alternative embodiment, a plurality of inside cavities partially cover the inner surface of the sidewall 110 of the semi-panel 101. For example, the thickness of a semi-panel 101 along the depth direction 5 is 5cm, 10cm, 20cm, 40cm, 60 cm, 80cm, 100cm, etc.. For example, a semi-panel 101 has the following dimensions: 50cm x 100cm, or 100cm x 150cm, etc..

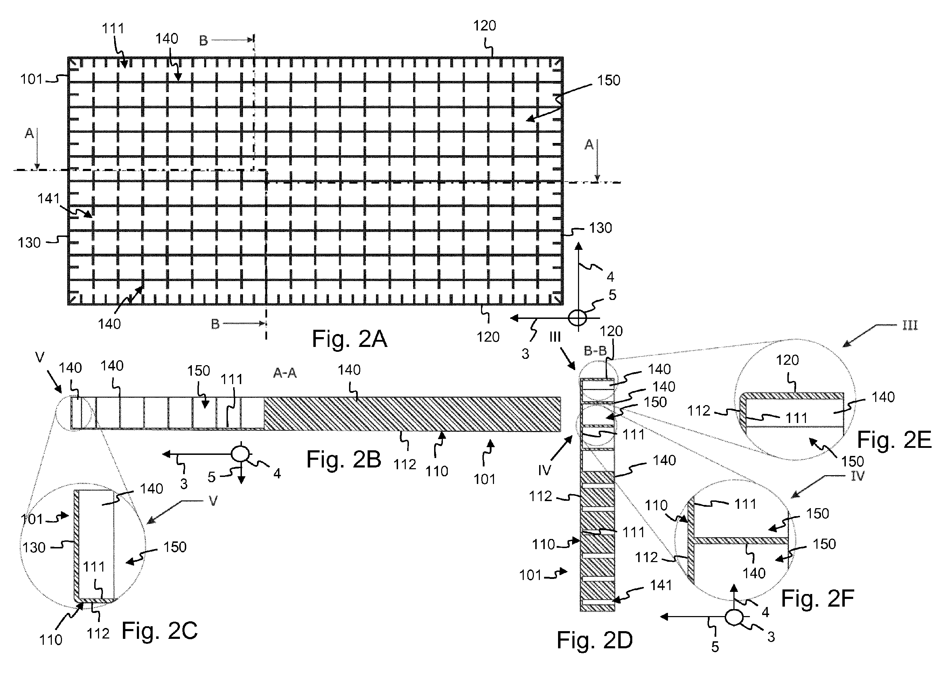

According to an embodiment shown in Fig. 2A, a longitudinal direction 3 is defined, a traverse direction 4 is defined and a depth direction 5 is defined. According to an embodiment shown in Fig. 2A, a top view of a semi-panel 101 of Fig. 1 is depicted. Components having identical reference numbers to components in Fig. 1 perform the same function. According to an embodiment shown in Fig. 2A, a semi-panel 101 is made of synthetic material 10 and comprises a sidewall 110 with an inner surface 111 and an outer surface. The semi-panel 101 further comprises a pair of parallel longitudinal walls 120 extending from the inner surface 111 of the sidewall 110 and a pair of traverse walls 130 extending from the inner surface 111 of the sidewall 110 along the depth direction 5. The semi-panel 101 comprises a plurality of longitudinal and traverse partition walls 140 extending from the inner surface 111 of the sidewall 110 along the depth direction 5. According to the embodiment depicted in Fig. 2A, the longitudinal and the traverse partition walls 140 extend as much as the longitudinal walls 120 along the depth direction 5 and as much as traverse walls 130 along the depth direction 5. According to an alternative embodiment, the longitudinal and the traverse partition walls 140 extend less than the longitudinal walls 120 along the depth direction 5 and/or less than the traverse walls 130 along the depth direction 5. As shown in Fig. 2A, longitudinal and the traverse partition walls 140 also extend from the longitudinal walls 120 and from the traverse walls 130 along the longitudinal direction 3 and the traverse direction 4. The partition walls 140 of the semi-panel 101 delimitate inside cavities 150 in the semi-panel 101. The partition walls 140 further comprise respective openings 141 extending through the partition walls 140 such that a plurality of inside cavities 150 are connected along the longitudinal direction 3 through the openings 141. The semi-panel 101 is produced by injection moulding. According to the embodiment shown in Fig. 2A, the inner surface 111 of the sidewall 110 of the semi-panel 101 is completely covered with inside cavities 150. In other words, the inside cavities 150 completely cover the inner surface 111 of the sidewall 110 of the semi-panel 101. According to an alternative embodiment, a plurality of inside cavities partially cover the inner surface 111 of the sidewall 110 of the semi-panel 101. Fig. 2B is a side view of a cross-section of the semi-panel 101 of Fig. 2A along the A-A lines depicted on Fig. 2A along the longitudinal direction 3. The sidewall 110 of the semi-panel 101 is continuous along the longitudinal direction 3 of the semi-panel 101. The sidewall 110 comprises an inner surface 111 and an outer surface 112. The partition walls 140 extend from the inner surface 111 of the sidewall 110 of the semi-panel 101. The partition walls 140 delimitate inside cavities 150. Detail V of Fig. 2B is zoomed in on Fig. 2C. A partition wall 140 extends from a traverse wall 130 on Fig. 2C, thereby partially delimitating an inside cavity 150. Fig. 2D is a side view of a cross-section of the semi-panel 101 of Fig. 2A along the B-B lines depicted on Fig. 2A along the traverse direction 4. The sidewall 110 of the semi-panel 101 is continuous along the traverse direction 4 of the semi-panel 101. The sidewall 110 comprises an inner surface 111 and an outer surface 112. The partition walls 140 extend from the inner surface 111 of the sidewall 110 of the semi-panel 101. The partition walls 140 delimitate inside cavities 150. The partition walls 140 comprise respective openings 141 extending through the partition walls along the depth direction 5, but not extending through the sidewall 110 of the semi-panel 101. Detail III of Fig. 2D is zoomed in on Fig. 2E. A partition wall 140 extends from a longitudinal wall 120 on Fig. 2E, thereby partially delimitating an inside cavity 150.

According to an embodiment shown in Fig. 3, a longitudinal direction 3 is defined, a traverse direction 4 is defined and a depth direction 5 is defined. Components having identical reference numbers to components in Fig. 1 perform the same function. According to an embodiment shown in Fig. 3, a semi-panel 101 is made of synthetic material 10 and comprises a sidewall 110 with an inner surface and an outer surface. The semi-panel 101 further comprises a pair of parallel longitudinal walls 120 extending from the inner surface of the sidewall 110 and a pair of traverse walls 130 extending from the inner surface of the sidewall 110 along the depth direction 5. The semi-panel 101 comprises a plurality of longitudinal and traverse partition walls 140 extending from the inner surface of the sidewall 110 along the depth direction 5. According to the embodiment depicted in Fig. 3, the longitudinal and the traverse partition walls 140 extend as much as the longitudinal walls 120 along the depth direction 5 and as much as traverse walls 130 along the depth direction 5. According to an alternative embodiment, the longitudinal and the traverse partition walls 140 extend less than the longitudinal walls 120 along the depth direction 5 and/or less than the traverse walls 130 along the depth direction 5. As shown in Fig. 3, longitudinal and the traverse partition walls 140 also extend from the longitudinal walls 120 and from the traverse walls 130 along the longitudinal direction 3 and the traverse direction 4. The partition walls 140 of the semi-panel 101 delimitate inside cavities 150 in the semi-panel 101. The partition walls 140 further comprise respective openings 141 extending through the partition walls 140 such that a plurality of inside cavities 150 are connected along the longitudinal direction 3 and along the traverse direction 4 through the openings 141. The semi-panel 101 is produced by injection moulding. According to the embodiment shown in Fig. 3, the inner surface of the sidewall 110 of the semi-panel 101 is completely covered with inside cavities 150. In other words, the inside cavities 150 completely cover the inner surface of the sidewall 110 of the semi-panel 101. According to an alternative embodiment, a plurality of inside cavities partially cover the inner surface of the sidewall 110 of the semi-panel 101. For example, the thickness of a semi-panel 101 along the depth direction 5 is 5cm, 10cm, 20cm, 40cm, 60 cm, 80cm, 100cm, etc.. The inside cavities 150 of the semi-panel 101 have for example the following dimensions: 50mm x 50mm, or 50mm x 100mm, or 40mm x 40mm, or 30mm x 30mm. For example, a semi-panel 101 has the following dimensions: 50cm x 100cm, or 100cm x 150cm, etc..

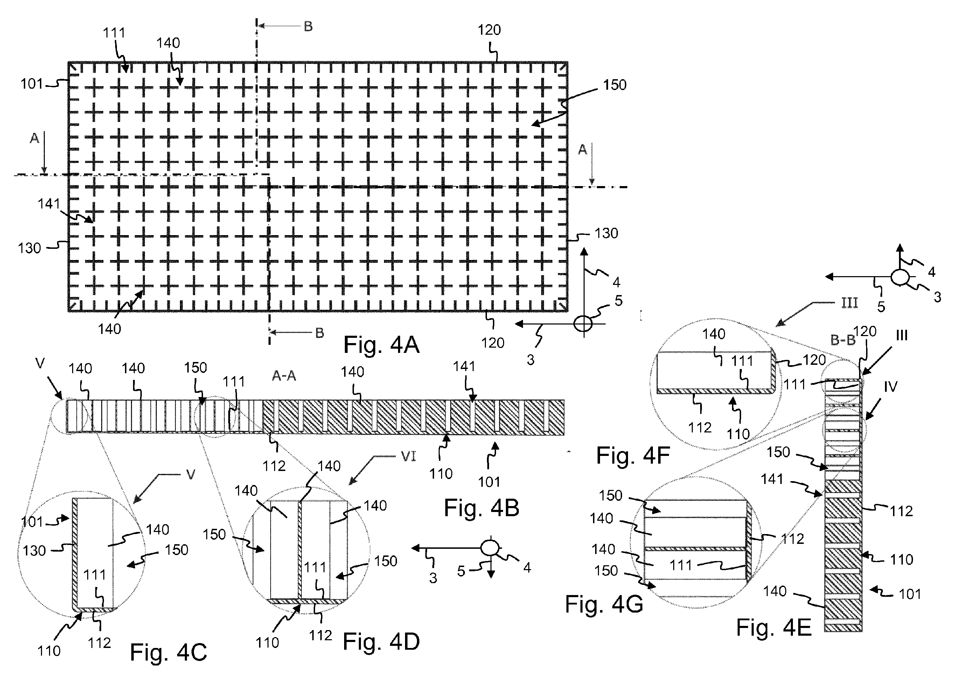

According to an embodiment shown in Fig. 4A, a longitudinal direction 3 is defined, a traverse direction 4 is defined and a depth direction 5 is defined. According to an embodiment shown in Fig. 4A, a top view of a semi-panel 101 of Fig. 3 is depicted. Components having identical reference numbers to components in Fig. 3 perform the same function. According to an embodiment shown in Fig. 4A, a semi-panel 101 is made of synthetic material 10 and comprises a sidewall 110 with an inner surface 111 and an outer surface. The semi-panel 101 further comprises a pair of parallel longitudinal walls 120 extending from the inner surface of the sidewall 110 and a pair of traverse walls 130 extending from the inner surface of the sidewall 110 along the depth direction 5. The semi-panel 101 comprises a plurality of longitudinal and traverse partition walls 140 extending from the inner surface of the sidewall 110 along the depth direction 5. According to the embodiment depicted in Fig. 3, the longitudinal and the traverse partition walls 140 extend as much as the longitudinal walls 120 along the depth direction 5 and as much as traverse walls 130 along the depth direction 5. According to an alternative embodiment, the longitudinal and the traverse partition walls 140 extend less than the longitudinal walls 120 along the depth direction 5 and/or less than the traverse walls 130 along the depth direction 5. As shown in Fig. 3, longitudinal and the traverse partition walls 140 also extend from the longitudinal walls 120 and from the traverse walls 130 along the longitudinal direction 3 and the traverse direction 4. The partition walls 140 of the semi-panel 101 delimitate inside cavities 150 in the semi-panel 101. The partition walls 140 further comprise respective openings 141 extending through the partition walls 140 such that a plurality of inside cavities 150 are connected along the longitudinal direction 3 and along the traverse direction 4 through the openings 141. The semi-panel 101 is produced by injection moulding. According to the embodiment shown in Fig. 3, the inner surface of the sidewall 110 of the semi-panel 101 is completely covered with inside cavities 150. In other words, the inside cavities 150 completely cover the inner surface of the sidewall 110 of the semi-panel 101. According to an alternative embodiment, a plurality of inside cavities partially cover the inner surface of the sidewall 110 of the semi-panel 101. Fig. 4B is a side view of a cross-section of the semi-panel 101 of Fig. 4A along the A-A lines depicted on Fig. 4A along the longitudinal direction 3. The sidewall 110 of the semi-panel 101 is continuous along the longitudinal direction 3 of the semi-panel 101. The sidewall 110 comprises an inner surface 111 and an outer surface 112. The partition walls 140 extend from the inner surface 111 of the sidewall 110 of the semi-panel 101. The partition walls 140 delimitate inside cavities 150. Detail V of Fig. 4B is zoomed in on Fig. 4C. A partition wall 140 extends from a traverse wall 130 on Fig. 4C, thereby partially delimitating an inside cavity 150. Detail VI of Fig. 4B is zoomed in on Fig. 4D. A longitudinal partition wall 140 extends from the inner surface 111 of the sidewall 110 of the semi-panel 101 on Fig. 4D and a traverse partition wall 140 extends from the inner surface 111 of the sidewall 110 of the semi-panel 101 on Fig. 4D. The longitudinal partition wall 140 is perpendicular to the traverse partition wall 140 on Fig. 4D, thereby partially delimitating two inside cavities 150, one on each side of the traverse partition wall 140. Fig. 4E is a side view of a cross-section of the semi-panel 101 of Fig. 4A along the B-B lines depicted on Fig. 4A along the traverse direction 4. The sidewall 110 of the semi-panel 101 is continuous along the traverse direction 4 of the semi-panel 101. The sidewall 110 comprises an inner surface 111 and an outer surface 112. The partition walls 140 extend from the inner surface 111 of the sidewall 110 of the semi-panel 101. The partition walls 140 delimitate inside cavities 150. The partition walls 140 comprise respective openings 141 extending through the partition walls along the depth direction 5, but not extending through the sidewall 110 of the semi-panel 101. Detail III of Fig. 4E is zoomed in on Fig. 4F. A partition wall 140 extends from a longitudinal wall 120 on Fig. 2E, thereby partially delimitating an inside cavity 150. Detail IV of Fig. 4E is zoomed in on Fig. 4G. A longitudinal partition wall 140 extends from the inner surface 111 of the sidewall 110 of the semi-panel 101 on Fig. 4G and a traverse partition wall 140 extends from the inner surface 111 of the sidewall 110 of the semi-panel 101 on Fig. 4G. The longitudinal partition wall 140 is perpendicular to the traverse partition wall 140 on Fig. 4G, thereby partially delimitating two inside cavities 150, one on each side of the traverse partition wall 140.

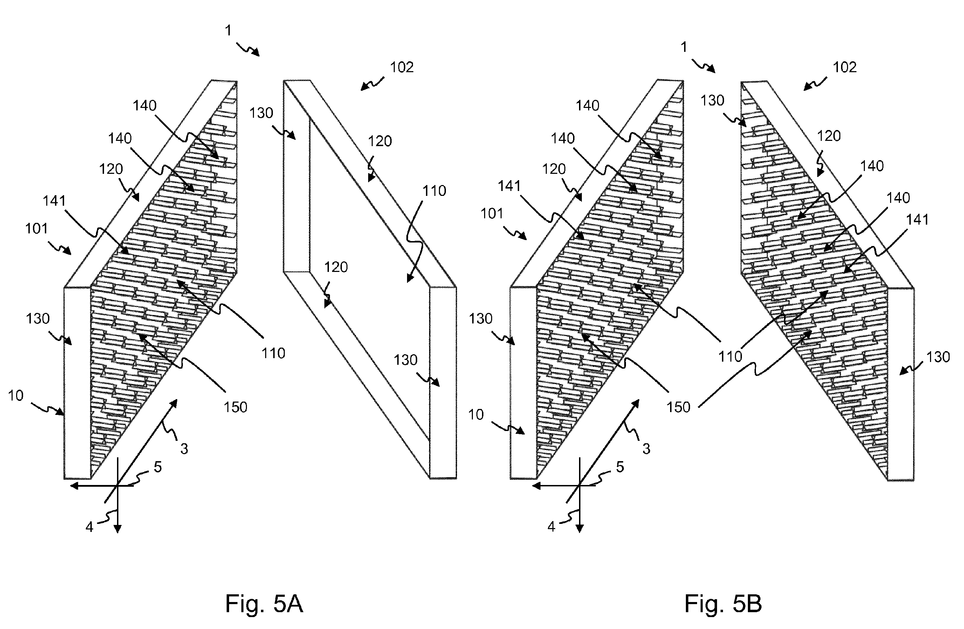

Fig. 5A schematically illustrates an exploded view of a separation panel according to the present invention wherein a longitudinal direction 3 is defined, a traverse direction 4 is defined and a depth direction 5 is defined. Components having identical reference numbers to components in Fig. 3 perform the same function. The separation panel 1 comprises two semi-panels 101;102 made of synthetic material 10 and injection moulded. Each of the semi-panels 101;102 comprises a sidewall 110 comprising an inner surface and an outer surface. Each of the semi-panels 101;102 further comprises a pair of parallel longitudinal walls 120 extending from the inner surface of the sidewall 110 and a pair of parallel traverse walls 130 extending from the inner surface of the sidewall 110. One of the semi-panels 101;102 comprises a plurality of longitudinal and traverse partition walls 140 extending from the inner surface of the sidewall 110. The partition walls 140 delimitate inside cavities 150 in the semi-panel 101. The partition walls 140 comprise respective openings 141 extending through the partition walls 140 such that a plurality of inside cavities 150 are connected along the longitudinal direction 3 and along the traverse direction 4 through the openings 141. The two semi-panels 101;102 are welded together along the longitudinal walls 120 and along the traverse walls 130, thereby forming the separation panel. Fig. 5B schematically illustrates an exploded view of a separation panel according to the present invention wherein a longitudinal direction 3 is defined, a traverse direction 4 is defined and a depth direction 5 is defined. The separation panel comprises two semi-panels 101;102 made of synthetic material 10 and injection moulded. Each of the semi-panels 101;102 comprises a sidewall 110 comprising an inner surface and an outer surface. Each of the semi-panels 101;102 further comprises a pair of parallel longitudinal walls 120 extending from the inner surface of the sidewall 110 and a pair of parallel traverse walls 130 extending from the inner surface of the sidewall 110. Each of the semi-panels 101;102 comprises a plurality of longitudinal and traverse partition walls 140 extending from the inner surface of the sidewall 110. The partition walls 140 delimitate inside cavities 150 in the semi-panel 101. The partition walls 140 comprise respective openings 141 extending through the partition walls 140 such that a plurality of inside cavities 150 are connected along the longitudinal direction 3 and along the traverse direction 4 through the openings 141. The two semi-panels 101;102 are welded together along the longitudinal walls 120 and along the traverse walls 130 such that the inner surfaces of the semi-panels 101;102 face each other, thereby forming a closed structure with a plurality of inside cavities connected along the longitudinal direction 3 and along the traverse direction 4, thereby forming the separation panel 1. For example, a separation panel 1 complies with the requirements of the European Norm 12537 for not pressurized and pressurized constructions. For example, the thickness of a semi-panel 101;102 along the depth direction 5 is 5cm, 10cm, 20cm, 40cm, 60 cm, 80cm, 100cm, etc.. The semi-panels 101;102 of the separation panel 1 of Fig. 5A have the same thickness. According to an alternative embodiment, the two semi-panels 101;102 of the separation panel 1 have different thicknesses along the depth direction 5. For example, the semi-panel 101 has a thickness of 5cm and the semi-panel 102 has a thickness of 20cm. For example, the semi-panel 101 has a thickness of 60cm and the semi-panel 102 has a thickness of 10cm.

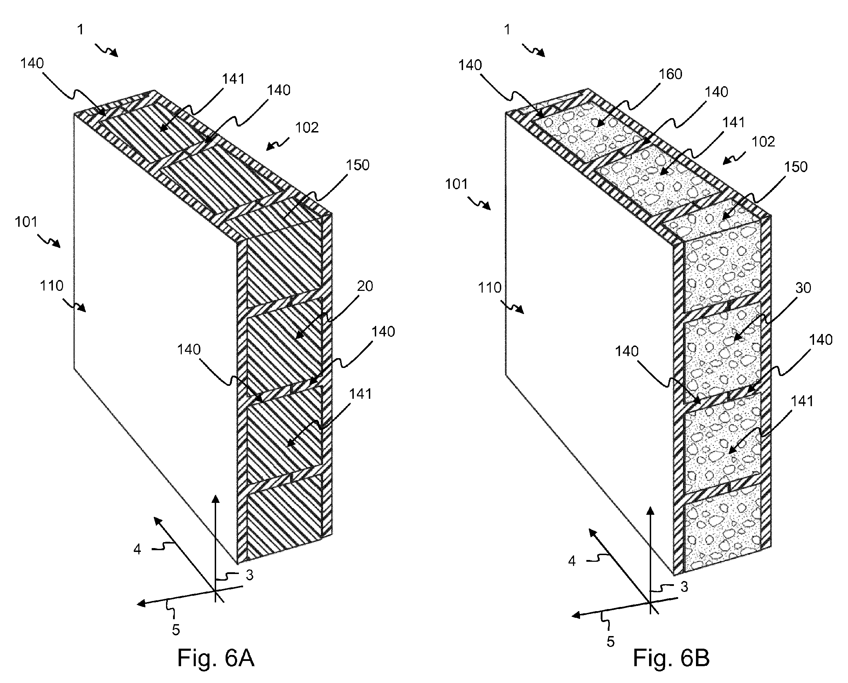

According to an embodiment shown in Fig. 6A, a longitudinal direction 3 is defined, a traverse direction 4 is defined and a depth direction 5 is defined. Components having identical reference numbers to components in Fig. 3 perform the same function. According to an embodiment shown in Fig. 6A, a separation panel 1 comprises two semi-panels 101;102. Each semi-panel 101;102 comprises a sidewall 110 and a plurality of longitudinal and traverse partition walls 140 extending from the respective inner surface of the semi-panels 101;102. The partition walls 140 comprise openings 141 extending through the partition walls 140. The two semi-panels 101;102 are arranged one against the other along the partition walls 140 such that the inner surfaces of the sidewalls 110 face each other, thereby forming a closed structure with a plurality of inside cavities connected along the longitudinal direction 3 and along the traverse direction 4 through the openings 141. The two semi-panels 101;102 are welded together along the partition walls 140. The separation panel 1 further comprises a fire resistant material 20 or a fire retardant material 21. The separation panel 1 of Fig. 6A is completely filled with fire resistant material 20 or fire retardant material 21. For example, the separation panel 1 is filled for example with PIR for Polyisocyanurate, or with phenol. According to an alternative embodiment, the separation panel 1 is partially filled with fire resistant material 20 or fire retardant material 21. The sidewalls 110 of one or the two semi-panels 101;102 is punctured with an injection needle from the outer surface to the inner surface of the sidewall 110 at a position of an inside cavity 150. The fire resistant material 20 or fire retardant material 21 is then injected in the inside cavity 150. This method step is then repeated for one or more additional inside cavities 150, thereby partially or fully filling the separation panel 1 with fire resistant material 20 or fire retardant material 21. For example, the resistance of a separation panel 1 to heat is indicated by a calculation of its R-value. A R-value is indicative for the resistance of the separation panel to heat transfer. For example, a separation panel 1 according to the present invention made in PP 50 and which comprises inside cavities with dimensions of 50x50x50cm3 demonstrates a R-value of 0.59. For example, a panel 1 according to the present invention made in PP 50 and which comprises inside cavities with dimensions of 50x100x50cm3 demonstrates a R-value of 0.56. For example, a panel 1 according to the present invention which comprises inside cavities with dimensions of 50x50x20cm3 demonstrates a R-value of 0.50. According to an embodiment shown in Fig. 6B, a longitudinal direction 3 is defined, a traverse direction 4 is defined and a depth direction 5 is defined. According to an embodiment shown in Fig. 6B, a separation panel 1 comprises two semi-panels 101;102. Each semi-panel 101;102 comprises a sidewall 110 and a plurality of longitudinal and traverse partition walls 140 extending from the respective inner surface of the semi-panels 101;102. The partition walls 140 comprise openings 141 extending through the partition walls 140. The two semi-panels 101;102 are arranged one against the other along the partition walls 140 such that the inner surfaces of the sidewalls 110 face each other, thereby forming a closed structure with a plurality of inside cavities connected along the longitudinal direction 3 and along the traverse direction 4 through the openings 141. The two semi-panels 101;102 are welded together along the partition walls 140. The separation panel 1 further comprises concrete 30. The separation panel 1 of Fig. 6B is completely filled with concrete 30. According to an alternative embodiment, the separation panel 1 is partially filled with concrete 30. One or more partition walls 140 comprise a filling opening 160. Concrete 30 is added in the separation panel 1 through the filling opening 160. The method further comprises allowing the concrete 30 to set and closing the filling opening 160 in the partition walls 140. The separation panel 1 of Fig. 6B is fully filled with concrete 30. According to an alternative embodiment, the separation panel 1 of Fig. 6B is partially filled with concrete 30. The concrete 30 used to fill the separation panel 1 of Fig. 6B comprises for example concrete, water, and polystyrene granules, etc..

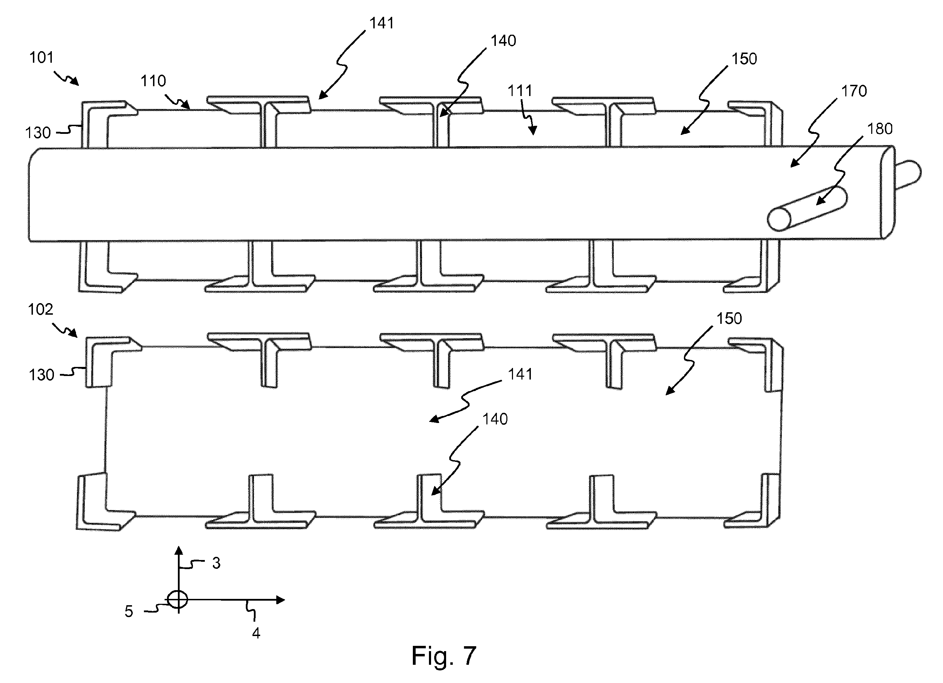

According to an embodiment shown in Fig. 7, a longitudinal direction 3 is defined, a traverse direction 4 is defined and a depth direction 5 is defined. Components having identical reference numbers to components in Fig. 3 perform the same function. A semi-panel 101 comprises a sidewall 110 which comprises an inner surface 111. A semi-panel 102 comprises a sidewall 110 which comprises an inner surface 111. The semi-panel 101 comprises longitudinal and traverse partition walls 140 comprising respective openings 141 extending through the partition walls 140 such that the partition walls 140 delimitate inside cavities 150 in the semi-panel 101 connected along the longitudinal direction 3 and along the traverse direction 4 through the openings 141. A ballast 170 is inserted in the openings 141 along the traverse direction before the two semi-panels 101;102 are welded together, thereby forming the separation panel. A fixation 180 is inserted in the ballast 170 along the depth direction 5 in order to fix the separation panel to another separation panel and/or to the ground. According to an alternative embodiment, the fixation 180 is inserted in the ballast 170 along the longitudinal direction 3 or along the traverse direction 4. According to a further alternative embodiment, the separation panel comprises a plurality of fixations 180 extending along the longitudinal direction 3, the traverse direction 4 or the depth direction 5 and adapted to fix the separation panel to the ground and/or to adjacent separation panels. According to an alternative embodiment, the ballast 170 is completely inserted in the semi-panel 101 before the two semi-panels 101 and 102 are welded together, thereby not extending outside of the separation panel. According to a further alternative embodiment, the ballast 170 is inserted in the openings 141 along the longitudinal direction. The ballast 170 is one or more of the following: metallic beams such as iron beams, metallic tubes such as iron tubes, a net of metallic beams, for example a net of iron beams, fibre glass and/or composite beams or tubes or bars, etc..

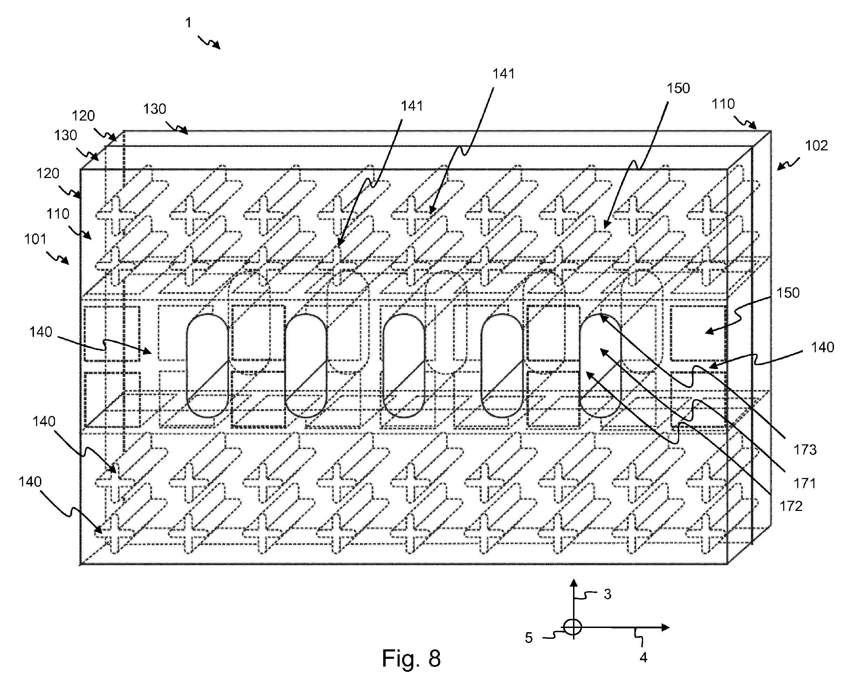

According to an embodiment shown in Fig. 8, a separation panel 1 comprises two semi-panels 101;102. A longitudinal direction 3 is defined in Fig. 8, a traverse direction 4 is defined in Fig. 8 and a depth direction 5 is defined in Fig. 8. Components having identical reference numbers to components in Fig. 3 perform the same function. Each semi-panel 101;102 comprises a sidewall 110, a pair of parallel longitudinal walls 120 extending from the inner surface of the respective sidewall 110 and a pair of parallel traverse walls 130 extending from the inner surface of the respective sidewall 110. Each semi-panel 101;102 comprises longitudinal and traverse partition walls 140 extending from the inner surface of the respective sidewall 110 such that the partition walls 140 delimitate inside cavities 150 in each semi-panel 101;102. The sidewalls 110 of the semi-panels 101;102 further comprise a plurality of transversal openings 141 adapted to face each other when the two semi-panels 101;102 are arranged one against the other, wherein each transversal opening 171 is delimited by walls 172 having a convex cross-section 173, and where said walls 172 are bent towards one another and are connected to one another so that they give said walls 172 a convex cross-section 173. The transversal openings 171 are oblong. According to alternative embodiments, the transversal openings 171 are different from one another and/or are square, round, defined in a particular shape such as a triangle, a pentagon, a specific shape or logo, etc.. The transversal openings 171 are periodically spread in the separation panel 1 of Fig. 8. According to an alternative embodiment, the transversal openings 171 are not periodically defined in the separation panel 1. Additionally, one or more transversal openings 171 may be defined at one side of the separation panel 1 and/or at another side of the separation panel 1. The transversal openings 171 of Fig. 8 have the same dimensions. According to an alternative embodiment, the transversal openings 171 have different dimensions. The two semi-panels 101;102 are arranged one against the other along the longitudinal walls 120 and the traverse walls 130 such that the inner surfaces of the sidewalls 110 face each other, thereby forming a closed structure with a plurality of inside cavities 150 connected along the longitudinal direction 3 and along the traverse direction 4 through the openings 141. As shown on Fig. 8, in the surrounding of the transversal openings 171, the semi-panels 101;102 comprise longitudinal and traverse partition walls 140 which do not comprise respective openings 141, thereby forming inside cavities 150 which are not connected to each other when the two semi-panels are arranged one against the other.

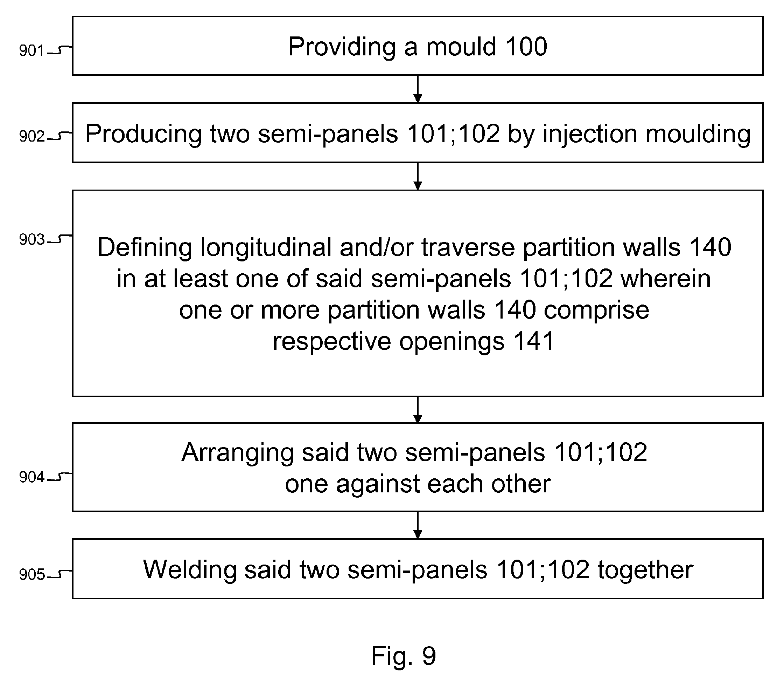

Fig. 9 is a flow chart of the steps of a method according to the present invention. In a first step 901, a mould 100 is provided. Two semi-panels 101;102 are produced in step 902 by injection moulding using the mould 100. A plurality of longitudinal and/or traverse partition walls 140 are defined in at least one of the semi-panels 101;102 in step 903, wherein one or more partitions walls 140 comprise respective openings 141 defined during the injection moulding. In step 904, the two semi-panels 101;102 are arranged one against the other, thereby forming a closed structure with a plurality of inside cavities connected along the longitudinal direction 3 and/or the traverse direction 4. Finally, in step 905, the two semi-panels 101;102 are welded together, thereby forming the separation panel 1.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A method of manufacturing a separation panel (1) made of a synthetic material (10), said method comprising the steps of:
- providing at least one mould (100);
- producing two semi-panels (101;102) by injection moulding, wherein each of said two semi-panels (101;102) comprises:
o a sidewall (110) comprising an inner surface (111) and an outer surface (112);
o a pair of parallel longitudinal walls (120) extending from said inner surface (111);
o a pair of parallel traverse walls (130) extending from said inner surface (111);
and wherein at least one semi-panel (101) of said two semi-panels (101;102) further comprises a plurality of longitudinal and/or traverse partition walls (140) extending from said inner surface (111), wherein:
∘ said partition walls (140) delimitate inside cavities (150) in said semi-panel (101); and
∘ one or more of said partition walls (140) comprise respective openings (141) extending through said partition walls (140);
- arranging said two semi-panels (101;102) one against the other along said longitudinal walls (120) and said traverse walls (130) such that said inner surfaces (111) of said sidewalls (110) face each other, thereby forming a closed structure with a plurality of inside cavities (150) connected along the longitudinal direction (3) and/or along the traverse direction (4) through said openings (141); and
- welding said two semi-panels (101;102) together along said longitudinal walls (120) and said traverse walls (130), thereby forming said separation panel (1).

2. A method according to claim 1, wherein said method further comprises the step of filling said separation panel (1) at least partially with a fire resistant material (20) or a fire retardant material (21).

3. A method according to claim 2, wherein said step of filling said separation panel further comprises:
- puncturing with an injection needle said sidewall of one of said semi-panels (101;102) from said outer surface (112) to said inner surface (111) at a position of an inside cavity (150); and
- injecting said fire resistant material (20) or said fire retardant material (21) in said inside cavity (150).

4. A method according to claim 1, wherein said method further comprises the step of filling said separation panel (1) at least partially with concrete (30).

5. A method according to claim 4, wherein said step of filling said separation panel comprises:
- producing one of said longitudinal walls (120) or one of said traverse walls (130) of at least one of said two semi-panels (101;102) with a filling opening (160);
- adding concrete (30) in said separation panel (1) through said filling opening (160);
- allowing said concrete (30) to set; and
- closing said filling opening (160) in said longitudinal or traverse walls (120;130).

6. A method according to one of the preceding claims, wherein said step of welding said two semi-panels (101;102) together comprises soldering.

7. A method according to one of the preceding claims, wherein said method further comprises inserting a ballast (170) in said openings (141) before said two semi-panels (101;102) are welded together.

8. A method according to one of the preceding claims, wherein said synthetic material (10) is thermoplastic.

9. A separation panel (1) made of a synthetic material (10), said separation panel (1) comprising two semi-panels (101;102) adapted to be produced by injection moulding, wherein each of said two semi-panels (101;102) comprises:
- a sidewall (110) comprising an inner surface (111) and an outer surface (112);
- a pair of parallel longitudinal walls (120) extending from said inner surface (111);
- a pair of parallel traverse walls (130) extending from said inner surface (111);
wherein at least one semi-panel (101) of said two semi-panels (101;102) further comprises a plurality of longitudinal and/or traverse partition walls (140) extending from said inner surface (111), wherein:
- said partition walls (140) are adapted to delimitate inside cavities (150) in said semi-panel (1); and
- one or more of said partition walls (140) comprise respective openings (141) extending through said partition walls (140);
and wherein said two semi-panels (101;102) are adapted to:
- be arranged one against the other along said longitudinal walls (120) and said traverse walls (130) such that said inner surfaces (111) of said sidewalls (110) face each other, thereby forming a closed structure with a plurality of inside cavities (150) connected along the longitudinal direction (3) and/or along the traverse direction (4) through said openings (141); and
- be welded together along said longitudinal walls (120) and said traverse walls (130).

10. A separation panel (1) according to claim 9, wherein said plurality of inside cavities (150) covers said inner surface (111) of said sidewall (110) completely.

11. A separation panel (1) according to claim 9 or 10, wherein both semi-panels (101;102) of said separation panel (1) comprise a symmetric plurality of partition walls (140) such that said partition walls (140) of one of said semi-panels (101) are in direct contact with said partition walls (140) of the other semi-panel (102) of said separation panel (1) when said two semi-panels (101;102) are arranged one against the other.

12. A separation panel (1) according to one of the claims 9 to 11, wherein said sidewall (110) is oblong.

13. A separation panel (1) according to one of the claims 9 to 11, wherein said separation panel (1) is further adapted to be used in a cattle pen or in an enclosure for livestock.

14. A separation panel (1) according to one of the claims 9 to 13, wherein said sidewalls (110) of said two semi-panels (101;102) comprise a plurality of transversal openings (171) adapted to face each other when said two semi-panels (101;102) are arranged one against the other, wherein each transversal opening (171) is delimited by walls (172) having a convex cross-section (173), and wherein said walls (172) are bent towards one another and are connected to one another so that they give said walls (172) a convex cross section (173).

15. A separation panel (1) according to claim 14, wherein at least one semi-panel (101) of said two semi-panels (101;102) further comprises a plurality of longitudinal and/or traverse partition walls (140) extending from said inner surface (111), wherein:
- said partition walls (140) are adapted to delimitate inside cavities (150) in said semi-panel (101); and
- one or more of said partition walls (140) of said inside cavities (150) delimited above and under said transversal openings (171) in said separation panel (1) comprise respective openings (141) extending through said partition walls (140).
